**Europäisches Patentamt**

**European Patent Office**

**Office européen des brevets**

(11) Veröffentlichungsnummer: **0 170 723 B1**

# (12) EUROPÄISCHE PATENTSCHRIFT

(45) Veröffentlichungstag der Patentschrift: **27.02.91**

(51) Int. Cl.⁵: **G01D 5/14**

(21) Anmeldenummer: **84113968.6**

(22) Anmeldetag: **19.11.84**

(54) **Verfahren und Vorrichtung zur Messempfindlichkeitserhöhung von berührungsfrei arbeitenden Wegmesssensoren.**

(30) Priorität: **24.12.83 DE 3347052**

(43) Veröffentlichungstag der Anmeldung:
**12.02.86 Patentblatt 86/07**

(45) Bekanntmachung des Hinweises auf die
Patenterteilung:
**27.02.91 Patentblatt 91/09**

(84) Benannte Vertragsstaaten:
**DE FR IT SE**

(56) Entgegenhaltungen:
**EP-A- 0 152 067**
**DE-C- 1 295 204**
**GB-A- 2 088 562**
**US-A- 3 956 973**

(73) Patentinhaber: **ROBERT BOSCH GMBH**
**Postfach 50**
**D-7000 Stuttgart 1(DE)**

(72) Erfinder: **Hachtel, Hansjörg**
**Buchenstrasse 4**
**D-7251 Weissach(DE)**
Erfinder: **Dobler, Klaus, Dr.-Ing.**
**Bettäckerstrasse 12**
**D-7016 Gerlingen(DE)**

**Beschreibung**

Es ist bekannt, zur Wegmessung, auch zur Bestimmung von mechanischen Verschiebungen o.dgl., unter anderen Meßverfahren auch nach dem Wirbelstromprinzip bzw. nach dem induktiven Prinzip arbeitende Meßsysteme einzusetzen. Dabei beruht das Wirbelstromprinzip darauf daß einer elektrischen Wicklung oder Spule gegenüberlie gend eine elektrisch gut leitende Fläche angeordnet ist (Grundprinzip), wobei u.a. der Abstand der Fläche zu den Spulenwindungen und/oder der jeweilige Überdeckungsbereich maßgebend ist für die Spannungsänderung, die sich bei Speisung der Spule mit einem entsprechend hochfrequenten Wechselstrom an den Spulenenden ergibt.

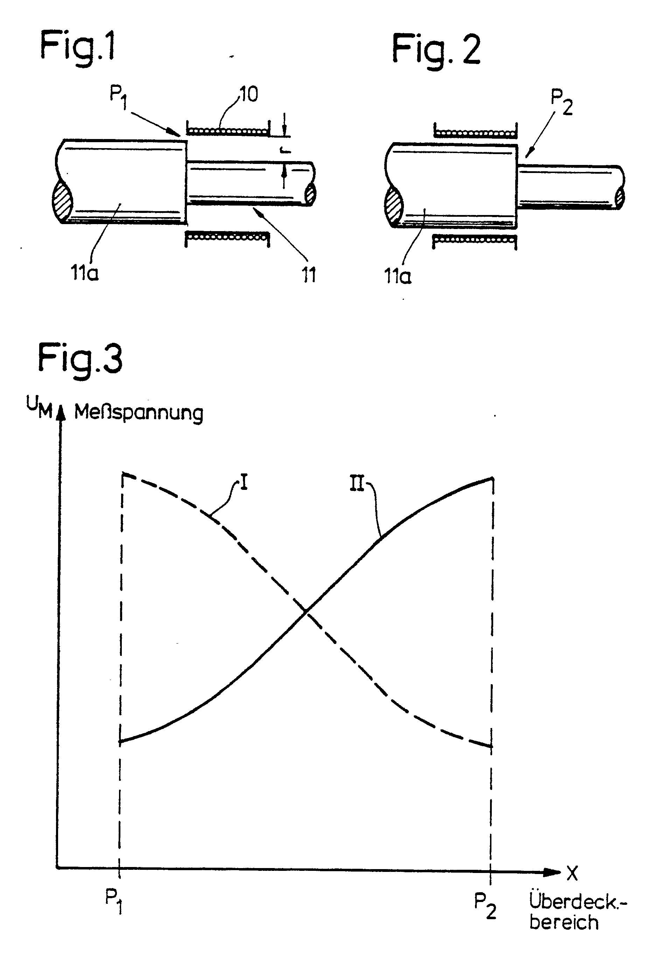

Im folgenden wird anhand der Darstellungen in den Fig. 1. 2 und 3 (Fig. 3 zeigt in Form eines Diagramms den Spannungsverlauf über dem Abstand der jeweils wirksamen Fläche bzw. dem Überdeckungsbereich) das Grundprinzip der Wirbelstrommessung sowie des induktiven Meßverfahrens erläutert.

Betrachtet man zunächst die Abstands- oder Wegmessung nach dem Wirbelstromprinzip bei einem praktischen Ausführungsbeispiel, welches in den Fig. 1 und 2 jeweils in unterschiedlichen Positionen P1 und P2 dargestellt ist - ein Sensorkern beispielsweise in Form einer abgesetzten Kolbenstange 11 bewegt sich mit seinem verdickten Bereich mehr oder weniger stark in das Innere einer ihn umgebenden ringförmigen Spule 10 -, dann ergibt sich anfänglich entsprechend dem Kurvenverlauf 1 in Fig. 3 eine hohe Ausgangs- oder Meßspannung $U_M$, deren Größe von der Höhe der an der Spule 10 anliegenden Spannung bestimmt wird. Der Abstand r zwischen der Spule und der von verjüngten Kolbenstangenteil herrührenden Metalloberfläche ist groß und es bilden sich nur geringe Wirbelströme aus. Taucht die Kolbenstange 11 mit ihrem verdickten Teil 11a zunehmend tiefer in die Spule ein (bis zur Position P2 in Fig. 2), dann vergrößert sich der gegenseitige Überdeckungsbereich zunehmend - der Abstand wird verringert - und es kommt zu einer wesentlich stärkeren Wirbelstromausbildung, zu entsprechend größeren Verlusten und einer starken Induktivitätsverminderung der Spule, so daß die Höhe der anliegenden Meßspannung abnimmt und sich insgesamt durch den Wirbelstrom effekt der in Fig. 3 dargestellte Meßspannungsverlauf (gestrichelte Kurve) ergibt.

Betrachtet man unter vergleichbaren Voraussetzungen - praktisches Ausführungsbeispiel wie in den Fig. 1 und 2 gezeigt; die Kolbenstange 11 besteht insbesondere in ihrem verdickten Teil aus permeablem, ferromagnetischem Material - jetzt das induktive Meßprinzip, dann ergibt sich für dieses ein Kurvenverlauf entsprechend II in Fig. 3, da sich bekanntermaßen die Spuleninduktivität erhöht, wenn in diese der Sensorkern 11a zunehmend eintaucht. Die Spannungserhöhung wird umso größer, je größer der Kerndurchmesser ist, daher steigt die Meßspannung mit stärker werdendem Durchmesser bzw. mit anwachsendem Überdeckungsbereich an.

In diesem Zusammenhang ist bekannt, bei den jeweiligen Meßverfahren sorgfältig darauf zu achten, daß das jeweils andere Meßverfahren keinen oder nur einen sehr geringen Einfluß hat, d.h. man verringert durch geeignete Auswahl der Parameter (Material, Trägerfrequenz, Spulenform) den Wirbelstromeffekt bei induktiven Meßverfahren beispielsweise oder eliminiert diesen völlig. Solche Maßnahmen sind auch erforderlich, da entsprechend der Diagrammdarstellung der Fig. 3 das jeweils andere Meßverfahren die Meßspannungsänderung des verwendeten Meßverfahrens relativiert, sich also auf dieses nivellierend auswirkt.

Aus der DE-B-12 95 204 ist eine Meßeinrichtung bekannt, bei der auf einem Meßstab eine erste Gruppe und eine zweite Gruppe von Teilungselementen in wechselnder Folge angeordnet sind, die möglichst gleiche axiale Länge aufweisen sollen. Die Elemente der ersten Gruppe bestehen aus hochpermeablem magnetischem Material und die Elemente der zweiten Gruppe aus einem Material mit geringer Permeabilität, zum Beispiel aus unmagnetischem Material, so daß die Elemente jeweils andere Feldkopplungseigenschaften aufweisen. Die Meßeinrichtung zum Abgriff der Elemente weisen zwei Spulenverschiebungskörper auf, die aus jeweils zwei Transformatorspulen bestehen und von denen eine Spule in zwei Hälften beiderseits der anderen Spule aufgespalten sein kann. Eine der beiden Spulen dient als Primärwicklung eines Transformators, während die andere Wicklung als Sekundärwicklung des Transformators die Meßelemente der Meßeinrichtung darstellen. Die Spulen der beiden Verschiebungskörpers sind jeweils in Reihe geschaltet. In Ausgangsstellung ragt die Primärspule möglichst zu gleichen Teilen in die Elemente der ersten und der zweiten Gruppe hinein, und die Sekundärspulen der beiden Spulenverschiebungskörper sind so entgegengeschaltet, daß sich die induzierten Signale kompensieren. Bei der Bewegung des Meßstabs wird der von den Spulen umschlossene Teil der Elemente verändert. Diese Verschiebung ist in den Spulen der beiden Spulenverschiebungskörper entgegengesetzt. Die Meßsignalerzeugung beruht auf dem Transformatorprinzip. Die Feldlinien des von der stromdurchflossenen Primärspule erzeugten Magnetfeldes werden im Bereich des magnetischen Materials gebündelt und das Magnetfeld fließt durch das magnetische Material. Im Gegensatz hierzu findet im unmagnetischen Material keine Bündelung der Feldlinien statt; vielmehr wird die Ausbreitung des Magnetfeldes behindert.

Bei der Verschiebung des Stabes wird nun der Anteil der der Primärspule zugeordneten Anteile der magnetischen Materialien und der unmagnetischen Materialien verändert, wodurch das über die Sekundärwicklungen abgegriffene Meßsignal erzeugt wird. Die Primärspule muß zur Meßsignalerzeugung beide Teilungselemente abgreifen. Das Element aus unmagnetischen Material wirkt dabei als Kurzschlußelement. Eine Erhöhung der Meßempfindlichkeit durch Ausnutzung zweier physikalischer Effekte, des Wirbelstromeffektes und des induktiven Effektes ist nicht möglich.

Vorteile der Erfindung

Der Erfindung liegt die Aufgabe zugrunde, bei berührungsfrei arbeitenden elektronischen oder elektrischen Wegmeßsensoren die Empfindlichkeit über die sich aus der jeweiligen Benutzung des Wirbelstromprinzips oder des induktiven Prinzips ergebenden Möglichkeiten hinaus drastisch zu erhöhen.

Das erfindungsgemäße Verfahren gemäß Patentanspruch 1 bzw, die erfindungsgemäße Vorrichting gemäß Patentanspruch löst diese Aufgabe jeweils

Es ergibt sich der Vorteil, daß durch kombiniertes und gleichzeitiges Messen nach dem induktiven Meßprinzip und dem Wirbelstrommeßprinzip mit Hilfe mindestens einer, stets auf beide Meßprinzipien reagierenden Sensorspule eine beträchtliche Empfindlichkeitserhöhung insgesamt im Sinne einer synergistischen Beitragsbildung durch beide Meßprinzipien erzielt werden kann.

Vorteilhaft ist ferner, daß das erfindungsgemäße Meßprinzip die Weg- oder Verschiebungsmessung von im Durchmesser abgesetzten als auch von über den Verschiebeweg einen konstanten oder nahezu konstanten Durchmesser aufweisenden Sensorkernen oder Kolbenstangen ermöglicht. Dabei kann die Unterteilung des Sensorkerns in einen para- oder diamagnetischen, jedoch elektrisch gut leitenden und in einen ferromagnetischen Bereich auch durch Auflegen geeigneter Materialien in Form von Folien o. dgl. auf den Sensorkern oder, allgemein gesagt, auf das Element durchgeführt werden, welches den zu messenden Weg zurücklegt.

Ein weiterer Vorteil bei vorliegender Erfindung besteht darin, daß neben der erheblich größeren Empfindlichkeit auch ein nur sehr geringer Fehlereinfluß bei radialen Sensorkernbewegungen - Auslenkungen senkrecht zur Meßrichtung - auftritt, da sich hierdurch hervorgerufene Spannungsänderungen in der Spule, jedenfalls teilweise, sofort kompensieren.

Durch die in den aghängiger Patent ansprüchen aufgeführten Maßnahmen sind vorteilhafte Weiterbildungen und Verbesserungen des erfindungsgemäßen Meßprinzips möglich. Besonders vorteilhaft ist wegen der durch die erhöhte Empfindlichkeit bewirkten Vergrößerung des Auflösungsvermögens auch die Möglichkeit, eine Verschiebebewegung von Sensorkernen in kleinen und kleinsten Wegeinheiten digital zu erfassen. In einer Ausgestaltung der Erfindung kann anstelle einer ringförmigen Sensorspule schließlich auch eine spiralförmig gewickelte Flachspule Verwendung finden, die das die Verschiebung durchführende Element (Sensorkern) lediglich einseitig erfaßt.

Zeichnung

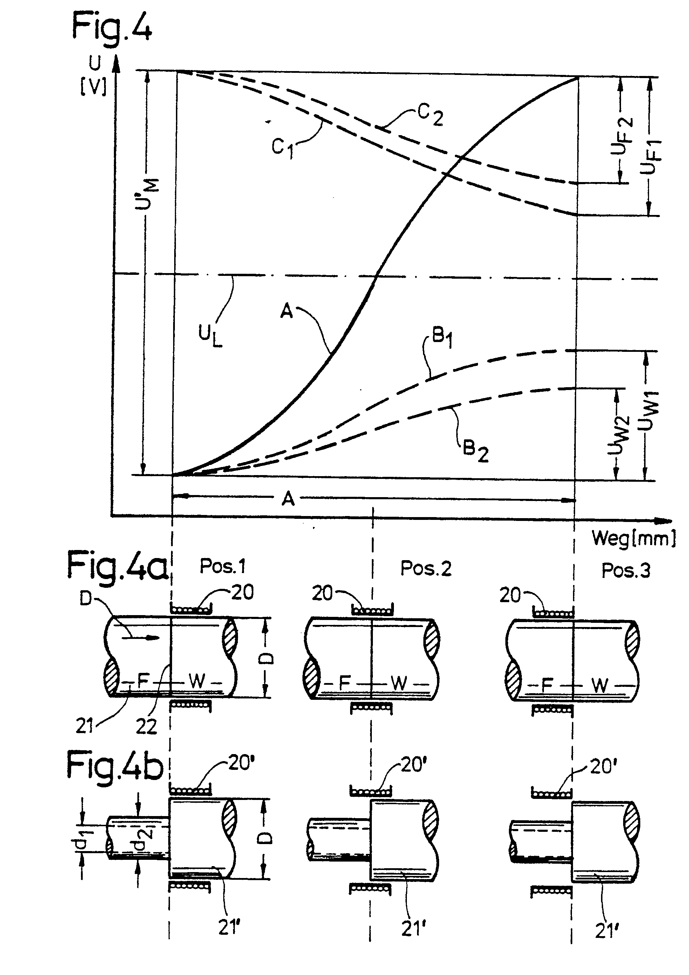

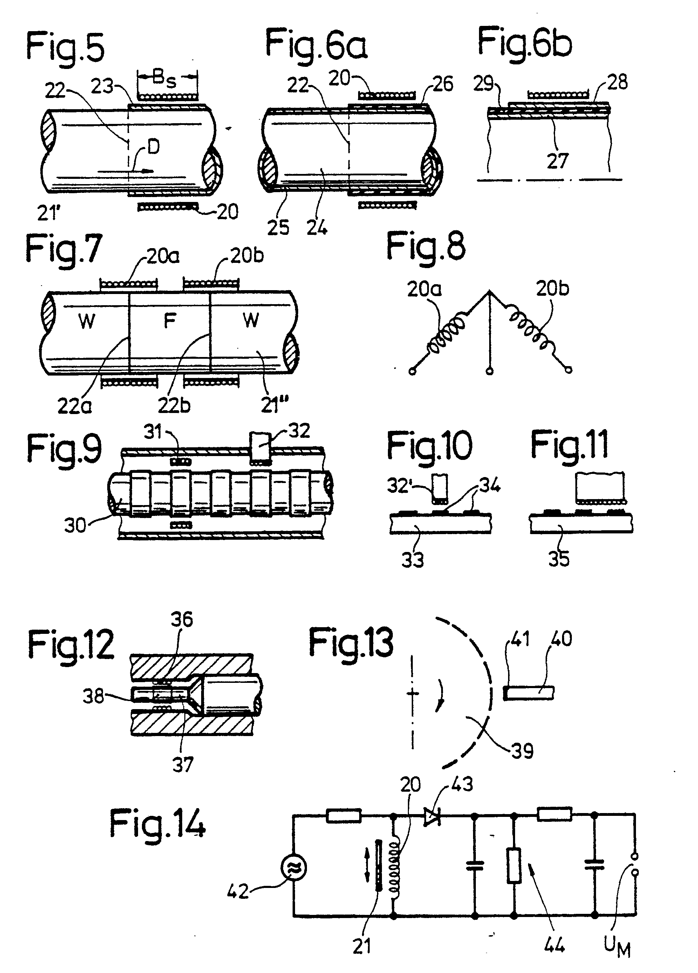

Ausführungsbeispiele der Erfindung sind in der Zeichnung dargestellt und werden in der nachfolgenden Beschreibung näher erläutert. Es zeigen die Fig. 1 bis 3 den bekannten Stand der Technik angebende Schaubilder, und zwar Fig. 1 schematisch eine erste Relativposition zwischen Sensorkern und Meßspule, Fig. 2 eine zweite Relativposition zwischen Sensorkern und Meßspule und die Fig. 3 in Form eines Diagramms den Meßspannungsverlauf, der sich bei Verschiebung der Kolbenstange (Sensorkern) von der Relativposition der Fig. 1 zur Fig. 2 bei Messung nach dem Wirbelstromprinzip bzw. nach dem induktiven Prinzip ergibt, während die Fig. 4 bis 14 Ausführungsbeispiele der Erfindung zeigen nämlich Fig. 4 in Form eines Diagramms den Meßspannungsverlauf über dem Meßweg;mit zusätzlichen Spannungsverläufen, wenn lediglich nach dem Wirbelstromprinzip oder dem induktiven Prinzip gemessen wird, die Fig. 4a und 4b auf die Diagrammdarstellung der Fig. 4 bezogene Relativpositionen zwischen Sensorkern und Meßspule jeweils, die Fig. 5, 6a und 6b, jeweils in Schnittzeichnungen, verschiedene Ausführungsformen von folienartigen Belägen am den zu messenden Weg zurücklegenden Element (Sensorkern), Fig. 7 eine Variante vorliegender Erfindung mit zwei Teilmeßspulen, die entsprechend Fig. 8 nach dem Wheatstone'schen Halbbrückenprinzip verschaltet sind, Fig. 9 zeigt eine mögliche Ausführungsform zur digitalen Erfassung von kleinen und kleinsten Wegeinheiten, Fig. 10 in schematisierter Darstellung die Ausbildung der Sensorspule als spiralförmig gewickelte Flachspule, Fig. 11 die Ausbildung einer Meßflachspule bei Überdekung mehrerer unterschiedlicher Stoffbereiche des Verschiebungselements, Fig. 12 schematisiert die Messung einer Ventilnadelbewegung, wobei die Nadel den Sensorkern bildet, Fig. 13 eine Meßmöglichkeit nach dem erfindungsgemäßen Prinzip zur Erfassung rotierender Bewegungen und Auflösung in Winkeleinheiten und Fig. 14 schematisiert eine mögliche Ausführungsform einer Auswerteschaltung mit Gleichstrom-Meßausgang.

Beschreibung der Ausführungsbeispiele

Der Grundgedanke vorliegender Erfindung besteht darin, bewußt eine kombinierte Erfassung einer Verschiebebewegung oder eines zu messenden Weges unter gleichzeitiger Ausnutzung der physikalischen Gegebenheiten des Wirbelstrom-Meßprinzips und des induktiven Meßprinzips zu realisieren, wobei die Relativverschiebung zwischen der mindestens einen Meßspule und einem Element durchgeführt wird, mindestens dessen Oberfläche in mindestens einen elektrisch gut leitenden, jedoch dia- oder paramagnetischen Bereich und einen ferromagnetischen Bereich unterteilt ist.Die Ermittlung des Meßweges ergibt sich dann durch Auswertung sowohl des induktiven als auch des Wirbelstrom-Meßprinzips, wodurch sich eine erhebliche Empfindlichkeitserhöhung und ein entsprechend großes Auflösevermögen erzielen läßt.

Dabei setzt die Erfindung die Kombination der beiden erwähnten Meßmethoden, Wirbelstromprinzip und induktives Prinzip, gezielt so ein, daß die Einwirkung der beiden Prinzipien auf die Meßspule nicht gleichzeitig, sondern in Abhängigkeit zur Verschiebebewegung erfolgt; mit anderen Worten, der jeweils vorgesehenen Sensorspule (Ringspule oder Flachspule)werdenüber den Verschiebeweg gesehen jeweils sich ändernde unterschiedliche Gegenflächen angeboten, unterschiedlich bezüglich der elektrischen und der magnetischen Eigenschaften.

Betrachtet man die Darstellung der Fig. 4 in Verbindung mit den in Fig. 4a dargestellten Relativpositionen zwischen der Meßspule 20 und einem den zu messenden Weg zurücklegenden Verschiebeelement, Kolbenstange oder Sensorkern 21, wie er im folgenden ausschließlich noch genannt werden soll, dann ergibt sich als erste Voraussetzung, daß der Sensorkern 21 aus zwei verschiedenen Stoffen mit unterschiedlichen elektrischen Eigenschaften zusammengesetzt ist. So besteht der Sensorkernteil W beispielsweise aus einem elektrisch gut leitfähigen, jedoch dia- oder paramagnetischem Stoff (beispielsweise also Kupfer, Aluminium u.dgl.), während der Teil F aus ferromagnetischem Stoff, vorzugsweise hoher Permeabilität, besteht (beispielsweise also Eisen o. dgl.). Besonders günstig ist dabei, wenn die beiden Kernteile W und F jeweils noch Eigenschaften besitzen, die die Möglichkeiten des jeweils anderen Meßprinzips, für welches sie nicht bestimmt sind, be- oder verhindernde Wirkungen haben - mit anderen Worten beispielsweise, daß der ferromagnetische Kernteil F zusätzlich auch noch die Ausbildung von Wirbelströmen stark behindernde Eigenschaften besitzt, wie z.B. Massekerne, Ferritkerne u.dgl.

In Fig. 4a sind die jeweils eingenommenen Relativpositionen zwischen Meßspule 20 und dem gesamten Sensorkern 21 mit Pos.1, Pos. 2 und Pos. 3 angegeben und auf den Meßspannungsverlauf im Diagramm der Fig. 4 auch bezogen. Dabei ist bei Pos. 1 der elektrisch gut leitende Kernteil W vollständig im Überdeckungsbereich mit der hier als Ringspule ausgebildeten Meßspule 20 angeordnet; bei Pos. 2 befindet sich der Überdeckungsbereich gleichmäßig auf die Kernteile W und F aufgeteilt und bei Pos. 3 befindet sich die Meßspule 20 in Überdeckung ausschließlich mit dem ferromagnetische Eigenschaften aufweisenden Kernteil F. Wesentlich ist für das erfindungsgemäße Meßverfahren, daß die Trenn- oder Scheidelinie 22 zwischen den beiden Kernteilen W und F während der Anwendung des Meßverfahrens, also während der Durchführung der Relativverschiebung zwischen Sensorkern 21 und Meßspule 20,längs der Meßspulenbreite, in diesem angewendeten Fall, sich ebenfalls verschiebt.

Im Diagramm der Fig. 4 ist zunächst strichpunktiert die an der Meßspule 20 bei Speisung mit einer Spannung geeigneter Frequenz in Abhängigkeit zum Spulenscheinwiderstand sich ergebende Nullspannung $U_L$ angegeben, wenn die Meßspule 20 die Wirkung einer Luftspule hat, also ohne Sensorkern ist. Davon ausgehend läßt sich dann im Diagramm der Fig. 4 die Meßspannung über der Relativbewegung Meßspule - Sensorkern auftragen. Es ergeben sich dann die folgenden Zusammenhänge.

In Pos. 1 bedeckt die Meßspule 20 (siehe die Fig. 4a) den Kernteil W vollständig und der Meßspannungsverlauf entsprechend der Kurve A in Fig. 4 erreicht in diesem Fall seinen Minimalwert, da das Meßsystem (Sensor) jetzt nahezu ausschließlich nach dem Wirbelstromprinzip bei maximaler Wirbelstrombildung im Kernteil W arbeitet. Wird der Sensorkern 21 in Richtung des Pfeils D verschoben, dann erfaßt zunehmend das in der Zeichenebene linke Meßspulenende den aus ferromagnetischem Stoff bestehenden Kernteil F, während sich der Spulenabschnitt, der den Kernteil W umschließt, zunehmend verringert. Dies verursacht eine Erhöhung der Meßspannung, da einmal die Wirbelströme sich im Kernteil W verringern, gleichzeitig und in Zusammenwirken hiermit aber auch der Anteil der Spule sich vergrößert, der das Meßsignal auf bevorzugt induktive Weise erfaßt. Die Meßsignaländerung über dem Verschiebungsweg ist daher überproportional und ergibt einen entsprechend steilen Anstieg.

In Pos. 2 bedeckt die Wicklung die beiden Kernteile jeweils zur Hälfte, so daß davon ausgegangen werden kann, daß die Induktivität der gesamten Meßspule dann - bei entsprechender Abstimmung sonstiger Parameter (Material, Trägerfrequenz, Spulenform) - ungefähr so groß wie die der Luftspule ist, da sich die beiden hier maßgebenden Effekte (Wirbelstrom - induktive Wirkung) in etwa gegenseitig aufheben.

Mit weiterem Eintauchen in Richtung auf Pos. 3 erhöht sich die Meßspannung $U_M$ weiter, die ihren Maximalwert dann erreicht, wenn die Wicklung der Meßspule aus dem Wirbelstromeinfluß des Kernteils W vollständig herausgetreten und den Sensorkern jetzt ausschließlich auf induktive Weise erfaßt, genauer gesagt, von dessen ferromagnetischem Kernteil F nahezu ausschließlich beeinflußt wird.

Die durch das erfindungsgemäße Meßprinzip erzielte, besonders wirkungsvolle Empfindlichkeitserhöhung bei Wegmessungen wird deutlich, wenn man, auf der Grundlage der gleichen Verschiebebewegung und auch sonstiger gleicher Komponenten, die maximale Meßspannungsänderung nach der Erfindung bei den gegebenen Relativbewegungen von Meßspule/Sensorkern vergleicht mit den konventionellen Ergebnissen beim Wirbelstrom-Meßverfahren und dem induktiven Meßverfahren.

Im folgenden wird zunächst auf ein ebenfalls mögliches, ausschließliches Wirbelstrom-Meßverfahren eingegangen. Wird der Sensorkernweg nach dem Wirbelstrom-Meßprinzip erfaßt, dann ergibt sich im gleichen Diagramm der Fig. 4 der im Kurvenverlauf B1 dargestellte Spannungsverlauf. Abgestellt wird in diesem Fall auf die Relativpositionen, wie sie in Fig. 4b dargestellt sind und wobei das notwendigerweise "Fehlen" des jeweils anderen Kernteils dadurch verdeutlicht wird, daß der Sensorkern bei der Darstellung der Fig. 4b einen größeren Durchmesser D aufweist, der die jeweilige Messung nach dem Wirbelstrom- und dem induktiven Meßprinzip ermöglicht und einen Teil mit einem geringeren Durchmesser d2 bzw. mit einem noch geringeren Durchmesser d1. Geht man bei der Betrachtung zunächst des Wirbelstromverfahrens davon aus, daß der Sensorkern aus dia- oder paramagnetischem Material mit guter elektrischer Leitfähigkeit besteht, dann werden, je nachdem, ob die Wicklung der Meßspule den stärkeren oder dünneren Kernteil erfaßt, mehr oder weniger Wirbelströme erzeugt. Da die Größe der Wirbelströme die Spuleninduktivität beeinflußt, vermindert sich - bezogen auf die weiter vorn erwähnte Luftspulenspannung $U_L$ - die Meßspannung entsprechend. In Pos. 1 ist die Meßspannung genauso niedrig wie im Kurvenverlauf A, da sich, gleiche Parameter vorausgesetzt, zunächst die gleichen Verhältnisse notwendigerweise einstellen. Schiebt man den Sensorkern in die Stellung Pos. 2 und weiter in Pos. 3, dann erhöht sich zwar die Meßspannung, sie bleibt jedoch (notwendigerweise) immer unter dem Niveau der Luftspulenspannung $U_L$, weil sich auch im dünneren Sensorteil noch Wirbelströme ausbilden. Der Kurvenverlauf B1 entspricht dem Änderungsverlauf der Meßspannung bei großen Durchmesserunterschieden (D, d1), der Kurvenverlauf B2 ergibt sich bei kleineren Durchmesserunterschieden (D, d2); es ergeben sich dann entsprechend maximale Meßspannungsänderungen, wie im Diagramm angegeben $U_{W1}$ bzw. $U_{W2}$.

Erfolgt die Messung (ausschließlich) nach dem induktiven Meßverfahren, dann ergeben sich die in den Kurvenverläufen C1 und C2 aufgezeichneten Spannungsverläufe; wiederum bei Voraussetzung gleicher Parameter erhöht sich die Spuleninduktivität (bezogen auf die Induktivität der Luftspule) mehr oder weniger stark, je nachdem, ob der stärkere oder dünnere Kernteil von der Meßspule 20' erfaßt ist. Es versteht sich, daß beim Vergleich mit dem induktiven Meßverfahren der Sensorkern 21' aus ferromagnetischem Material besteht. Demnach ergibt sich sinngemäß in Pos. 1 die maximale, nach dem induktiven Meßverfahren erreichbare Ausgangsmeßspannung, während sich beim Weiterschieben in Pos. 2 und Pos. 3 die Spannung verringert, jedoch immer über dem Niveau der Luftspulenspannung $U_L$ notwendigerweise verbleibt, da auch der dünnere Kern, auch bei kleinstem Durchmesser d1, den Luftspulenscheinwiderstand erhöht. Der Kurvenverlauf C1 zeigt den Verlauf der maximalen Spannungsänderung ($U_{F1}$) bei großen Durchmesserunterschieden, der Kurvenverlauf C2 die maximale Meßspannungsänderung $U_{F2}$ bei kleineren Durchmesserunterschieden, die durch das induktive Meßverfahren erreichbar sind.

Bei den bisherigen Betrachtungen ist nicht übersehen worden, daß sich sicherlich auch Feldlinien bilden, die über die Spulenenden hinausragen und in die benachbarten Zonen wirken; diese wurden bei den bisherigen Betrachtungen nicht berücksichtigt. Dies ist zulässig, da die davon ausgehende Schwächung des Meßeffektes i.a. gering ist. Es ist darauf hinzuweisen, daß solche Feldlinien den Meßeffekt bei allen Meßverfahren schwächen, jedoch die grundsätzlichen Unterschiede zwischen dem erfindungsgemäßen Meßprinzip und dem bekannten Meßverfahren nicht berühren.

Ferner ist bei den anhand der Diagrammverläufe der Fig. 4 erläuterten Verhältnissen davon ausgegangen, daß die jeweils gleiche Spule unter den gleichen elektrischen Bedingungen betrieben wird und daß außerdem die Kernparameter (Material, geometrische Abmessungen) identisch sind, bezogen auf den jeweiligen Vergleich.

Man erkennt, daß das mittels des kombinierten erfindungsgemäßen Meßverfahrens gewonnene Meßsignal $U_M'$ erheblich größer ist als jedes Meßsignal, welches mit dem reinen Wirbelstromverfahren oder mit dem induktiven Verfahren überhaupt erreicht werden kann. Ist es im übrigen - wenn man nach dem reinen Wirbelstromverfahren oder dem induktiven Verfahren arbeitet - aus eventuellen konstruktiven Gründen nicht möglich, den Sensorkern mit entsprechend großen Durchmesserunterschieden auszubilden, und je größer die Durchmesserunterschiede sind, umso größer ist ja auch der Hub der Meßspannungsänderung bei dem jeweiligen Verfahren, dann erhöhen sich die Vorteile des erfindungsgemäßen Verfahrens noch beträchtlich, da dieses, was auch ein Vorteil für sich alleine sein kann, Durchmesserunterschiede gar nicht erforderlich macht und beste Meßergebnisse gerade dann liefert, wenn mit gleichen Durchmessern beidseitig der Stofftrennlinie 22 (vergl. Fig. 4a) gearbeitet werden kann.

Das erfindungsgemäße Kombinationsmeßverfahren nutzt beide Meßprinzipien optimal, wobei es vorteilhaft ist, den ferromagnetischen Teil des Sensorkerns, der eine Kolbenstange o.dgl. sein kann, aus ferromagnetisch hochpermeablem, nach Möglichkeit eine Wirbelstromausbildung behindernden Material herzustellen, so daß auch bei hohen Trägerfrequenzen - bei welchen der Wirbelstromeffekt auf dem Kernteil W gut ausgenutzt wird - vorzugsweise induktiv im Bereich des Kernteils F gemessen wird.

Es versteht sich im übrigen und ist auch ein besonderer Vorteil vorliegender Erfindung, daß die erwähnten Kernteile W und F entsprechend dem vereinfachten Sensorkern der Fig. 4a nicht (massiv) einstoffig zu sein brauchen. Beispielsweise kann, wenn man von einem ferromagnetischen Grundmaterial für den Sensorkern ausgeht, eine metallische Folie oder auch Fläche die erforderliche Funktion für die Wirbelstrombildung übernehmen und umgekehrt. Wesentlich ist natürlich, daß die elektromagnetischen Eigenschaften des verwendeten Folienmaterials und des Sensorkerns unterschiedlich sind. So erhält man entsprechend der Darstellung der Fig. 5 beispielsweise einen guten Meßeffekt, wenn bei durchlaufender Ausbildung des Sensorkerns 21' aus ferromagnetischem, hochpermeablem Stoff (z. B. Fe, Fe-Ni Legierung, Mu-Metall) die Folie 23, in deren Erstreckungsbereich die Wirbelstromeffekte zum Tragen kommen, aus gut leitfähigem, nicht ferromagnetischem Metall (beispielsweise Aluminium, Kupfer, entsprechende Legierungen Al/Cu) besteht. Die Folie kann auch äußerst dünn sein und in im Grunde beliebiger Weise auf den Sensorkern aufgebracht werden, beispielsweise durch Aufkleben, Aufdampfen, oder durch elektrochemische Verfahren. Die Breite der beim Ausführungsbeispiel der Fig. 5 sowie auch der Fig. 6a, 6b, 7 als Meßspule verwendeten Ringspule ist mit Bs bezeichnet und die Meßspannungsänderung zur Anzeige eines Verschiebeweges tritt dann auf, wenn der Grenzübergang 22 zwischen dem Ende der aufgeklebten Folie und dem Kernmaterial in den Wirkungsbereich der Meßspule 20 eindringt.

Das erfindungsgemäße Grundprinzip läßt sich durch eine Vielzahl von verwendbaren Materialien und einer Vielzahl konstruktiver Möglichkeiten realisieren. So ist es umgekehrt auch möglich, etwa das Verschiebeelement, also den Sensorkern aus einem beliebigen Material, beispielsweise Kunststoff (Resitex, Plexiglas, PVC u.dgl.) herzustellen, wie in Fig. 6a bei 24 gezeigt. Auf ein solches beliebiges Sensorkernmaterial kann man eine erste Folie 25 aus ferromagnetischem Stoff und auf dieser wiederum eine zweite Folie 26 aufbringen, deren elektromagnetische Eigenschaften sich in dem weiter vorn schon beschriebenen Sinn unterscheiden müssen. Natürlich können die Folien auch unter Ausbildung der Übergangs- oder Grenzfläche 22 im Stoß aneinandergelegt auf dem Sensorkernmaterial aufgebracht werden.

Eine weitere Möglichkeit besteht entsprechend der Darstellung der Fig. 6b darin, in radialer Richtung den Sensorkern-Teilbereich, der zwei übereinanderliegende Folien aufweist, so auszubilden, daß zwischen den ferromagnetischen Schichten 27 und den dia- oder paramagnetischen Schichten 28 ein Zwischenraum gelassen wird, der gegebenenfalls auch mit einer Kunststoffschicht 29 ausgefüllt werden kann.

Die Fig. 7 und 8 zeigen eine weitere bevorzugte Ausgestaltung vorliegender Erfindung, bei welcher die Meßringspule in zwei Teilspulen 20a, 20b unterteilt ist, die jeweils getrennte Wicklungen bilden und entsprechend Fig. 8, wie dort lediglich schematisch angedeutet, nach dem bekannten Wheatstone'schen Halbbrückenprinzip verschaltet sind. Der Sensorkern, der in diesem Fall auch wieder von den Teilringspulen 20a, 20b umfaßt ist, weist dann aufeinanderfolgend alternierend Materialien oder mindestens Oberflächenbereiche auf, die ferromagnetisch und hochpermeabel sind (F) sowie Bereiche, die elektrisch gut leitend, dia- bzw. paramagnetische Eigenschaften aufweisen. Die Teilspulen 20a, 20b sind dann in ihrer relativen Abstandsbeziehung zueinander, beispielsweise auf ihre mittlere Breite bezogen, so angeordnet, daß die Grenzübergänge 22a, 22b zwischen den einzelnen Materialien, die die unterschiedlichen Meßverfahren gewährleisten, beim gemeinsam in einer Richtung verlaufenden Durchlaufen oder Verschieben in den beiden Teilspulen symmetrisch gegenläufige Wirkungen hervorrufen. Man erzielt so eine weitere erhebliche Empfindlichkeitserhöhung, wobei das Meßprinzip der beiden nach Art einer Brücke miteinander verschalteten Teilspulen auch bei sämtlichen anderen, bisher erläuterten Grundmeßverfahren angewendet werden kann. Es ist ferner möglich, sinngemäß auch mit vier Teilspulen zu arbeiten, die in einer Wheatstone'schen Vollbrücke verschaltet sind.

Eine weitere vorteilhafte Ausgestaltung vorliegender Erfindung besteht darin, infolge der durch die erhöhte Empfindlichkeit bewirkten Vergrößerung des Auflösungsvermögens kleine und kleinste Wegeinheiten berührungsfrei digital erfassen zu können. Ein mögliches Ausführungsbeispiel hierfür ist in Fig. 9 dargestellt; Fig. 9 zeigt, um nur eine mögliche Ausführungsform anzugeben, einen ferromagnetischen Kern 30 (z.B. Fe, Ferritkern), auf welchem ringförmig relativ schmale und in engem Abstand aufeinanderfolgende Zonen aus elektrisch gut leitfähigem, dia- oder paramagnetischem Material aufgebracht sind (oder umgekehrt). Beim Bewegen des Kerns in axialer Richtung werden an der Meßspule 31 (Ringspule) oder an einer alternativ verwendbaren, beispielsweise spiralförmig gewickelten Flachspule 32 abwechselnd Zonen unterschiedlicher elektromagnetischer Eigenschaften vorbeigeführt und die Meßspule 31, 32 arbeitet dann abwechselnd nach dem Wirbelstrom- oder dem induktiven Meßverfahren; d. h. ihre Ausgangsspannung verändert sich zwischen einer maximalen Ausgangsspannung zu den Momenten, in welchen der Spule zu deren Induktivitätserhöhung ferromagnetisches Material gegenüberliegt, und einer minimalen Ausgangsspannung, jeweils zu Momenten, bei denen durch die Wirbelstrombildung die Spuleninduktivität noch verringert wird, hin und her, so daß gut unterscheidbare Signalformen auftreten, die digital in geeigneter Weise erfaßt (Zähler) und weiterverarbeitet werden können.

Wie schon erwähnt, kann anstelle einer ringförmigen Sensorspule auch mit spiralförmig gewickelten Flachspulen oder sonstwie geeigneten Spulendimensionen und Konfigurationen gearbeitet werden, die beispielsweise den Sensorkern nur einseitig erfassen. Auch unter diesen Umständen ergeben sich auf die Spuleninduktivität die gleichen Auswirkungen beim Durchlaufen von sich in ihren elektromagnetischen Eigenschaften unterscheidenden Sensorkernzonen. Die Fig. 10 zeigt eine Flachspule 32', die oberhalb eines aus einem Grundmaterial bestehenden Verschiebeelements 33 (Sensorkern) angeordnet ist, auf welchem wieder Oberflächenbereiche 34 mit den jeweils anderen Materialeigenschaften angeordnet sind. Auf diese Weise können auch recht- oder mehreckige Stangen u. dgl. gemessen werden, deren Meßseite in entsprechende Flächen im weiter oben beschriebenen Sinn unterteilt ist.

Es ist nicht ausgeschlossen, daß, beispielsweise aufgrund geringen Platzbedarfs die auf dem Sensorkern angeordneten Zonen sehr eng stehen können, so daß die Breite der Ringspule oder der Durchmesser der Flachspule auch größer als eine Zonenbreite sein könnte. In diesem Fall ist es, wie die Fig. 11 zeigt, zweckmäßig, den Sensorkern 35 mit seinen unterschiedlichen Materialbelägen so auszubilden, daß diese Beläge ungefähr ein ungerades Vielfaches der Spulenbreite bilden.

Ein weiteres Anwendungsbeispiel des erfindungsgemäßen Meßprinzips läßt sich der Darstellung der Fig. 12 entnehmen; infolge des geringen Platzbedarfs der beispielsweise auf einem ferromagnetischen Meßkern aufgebrachten dia- oder paramagnetischen Schicht (die Schichtstärke kann sehr dünn sein) ist es möglich, Meßsensoren sehr klein auszubilden. Das Ausführungsbeispiel der Fig. 12 zeigt das Messen einer Ventilnadelbewegung, wobei die Ringspule mit 36 und die Ventilnadel aus ferromagnetischem Material mit 37 bezeichnet ist; der Belag in Form einer Folie, einer entsprechenden Materialaufdampfung o. dgl. trägt das Bezugszeichen 38.

In Anlehnung an das eine digitale Erfassung ermöglichende Ausführungsbeispiel der Fig. 9 kann entsprechend der Darstellung der Fig. 13 das erfindungsgemäße Kombinationsmeßprinzip auch zur Drehzahlerfassung beispielsweise eines rotierenden Meßrades eingesetzt werden, welches schematisch bei 39 mit seinen verschiedenen Oberflächenbelägen angedeutet ist und den in entsprechendem Abstand gegenüberliegend ein Träger 40 mit der Meßspule angeordnet ist, die in diesem Fall vorzugsweise eine Flachspule 41 ist. Durch das durch die Erfindung bedingte größere Auflösungsvermögen kann die Unterteilung in entsprechende Meßzonenbeläge des rotierenden Meßrades erhöht werden und man gewinnt so durch den Einsatz der Erfindung eine höhere Genauigkeit bei der Winkel- oder Drehzahlerfassung.

Schließlich zeigt das Ausführungsbeispiel der Fig. 14 schematisch noch eine mögliche Meßschaltung, wobei der Meßspule 20 von einem Wechselstromgenerator 42 eine Spannung zugeführt ist, die sich je nach der Spuleninduktivität in der oben erläuterten Weise verändert; durch Gleichrichtung dieser über der Spule abfallenden Spannung über eine nachgeschaltete Diode 43 und einige, als RC-Glieder ausgebildete Siebschaltungen, die insgesamt mit 44 bezeichnet sind, ergibt sich dann am Ausgang der Meßschaltung die Meßgleichspannung $U_M$.

## Ansprüche

1. Verfahren zur Meßempfindlichkeitserhöhung von berührungsfrei arbeitenden, mindestens eine Meßspule (20) umfassenden Wegmeßsensoren, wobei die Meßspule oder alle Meßspulen von einem Wechselstrom durchflossen ist/sind und relativ und angrenzend zu einem Verschiebeelement (21) (Sensorkern) geführt wird/werden und mindestens dessen Oberfläche abwechselnd mindestens einmal unterteilt ist in eine Zone, die in ihrer Wirkung einem ferromagnetischen, hochpermeablen Stoff entspricht und in eine Zone, die in ihrer Wirkung einem gut leitenden, dia- oder paramagnetischen Stoff oder nicht magnetisierbaren Stoff entspricht, so daß an der mindestens einen Meßspule (20) eine variable Meßspannung abfällt, die die Bestimmung des Meßwegs durch die gleichzeitige Anwendung des induktiven und des Wirbelstromprinzips auf die mindestens eine Meßspule (20) ermöglicht.

2. Verfahren nach Anspruch 1, dadurch gekennzeichnet, daß die mindestens eine Grenzschicht (22, 22a, 22b) zwischen den Zonen bei der zu bestimmenden Verschiebebewegung den Spulenwirkungsbereich durchläuft, derart, daß an der mindestens einen Meßspule (20) eine variable Meßspannung abfällt.

3. Verfahren nach Anspruch 1 oder 2, dadurch gekennzeichnet, daß die mindestens eine Meßspule über ihre elektrische Wirkungsbreite im Verlauf des Meßvorgangs gleichzeitig mindestens der Oberflächeneinwirkung sowohl eines elektrisch gut leitenden, jedoch dia- oder paramagnetische Stoffe als auch eines ferromagnetischen Stoffes ausgesetzt wird.

4. Verfahren nach einem der Ansprüche 1 oder 2, dadurch gekennzeichnet, daß die abwechselnden Zonen unterschiedlicher Materialeigenschaften auf dem eine Relativbewegung zur mindestens einen Meßspule durchführenden Sensorkern derart eng gestellt sind, daß die sich bei der Verschiebung ergebenden, sich wiederholenden maximalen und minimalen Spannungswerte als digitale Signale erfaßt und weiterverarbeitet werden.

5. Vorrichtung zur Empfindlichkeitserhöhung von berührungsfrei arbeitenden, mindestens eine Meßspule umfassenden Wegemeßsensoren, zur Durchführung des Verfahrens nach einem oder mehreren der Ansprüche 1 bis 4, dadurch gekennzeichnet, daß die Oberfläche des der Spule gegenüberliegenden und ihrem Wirkungseinfluß unterworfenen, relativ zu dieser eine Verschiebebewegung durchführenden Sensorkerns (21, 21', 24, 30, 33, 35) mindestens zwei getrennte Zonen mit einmal hochpermeabler, ferromagnetischer und zum anderen elektrisch gut leitfähiger, jedoch dia- oder paramagnetischer Wirkung aufweist mit einem Grenzübergang (22; 22a, 22b) zwischen beiden Zonen, der während des Meßvorgangs durch den Wirkungsbereich der Spule wandert.

6. Vorrichtung nach Anspruch 5, dadurch gekennzeichnet, daß der Sensorkern (21) die Form einer Stange aufweist und von der als Ringspule ausgebildeten Meßspule (20) umgeben ist.

7. Vorrichtung nach Anspruch 5, dadurch gekennzeichnet, daß der Sensorkern (33, 35, 39) eine Fläche umfaßt, deren in Zonen unterschiedlicher Materialwirkung ausgebildete Oberfläche einer Flachspule (32, 32') gegenüberliegt.

8. Vorrichtung nach einem der Ansprüche 5 bis 7, dadurch gekennzeichnet, daß der Sensorkern (30) eine Vielzahl von eng zueinander benachbarter Zonen unterschiedlicher Materialwirkung aufweist, die bei der Messung alternierend an der einen Spule (Ringspule 31; Flachspule 32) vorbeilaufen und daß das Ausgangssignal der Spule nach Maximal- und Minimalwert (digital) ausgewertet wird.

9. Vorrichtung nach einem oder mehreren der Ansprüche 5, 7, 8, dadurch gekennzeichnet, daß der Sensorkern kreisförmig mit unterschiedlichen Randzonen zur Drehzahlerfassung ausgebildet ist, denen mindestens eine Flachspule (41) gegenüberliegend angeordnet ist.

10. Vorrichtung nach einem oder mehreren der Ansprüche 5 bis 9, dadurch gekennzeichnet, daß der Sensorkern aus ferromagnetischem, hochpermeablem Material (Fe, Fe-Ni Legierung, Mu-Metall) besteht und zur Zonenbildung mit einer Folie oder Schicht aus elektrisch gut leitfähigem, jedoch nicht ferromagnetischem Material (Al, Cu, Legierungen daraus) beschichtet ist.

11. Vorrichtung nach einem oder mehreren der Ansprüche 5 bis 9, dadurch gekennzeichnet, daß der Sensorkern (24) aus beliebigem Material, gegebenenfalls ohne elektromagnetische Eigenschaften, besteht und eine erste Folie (25) mit ferromagnetischen, hochpermeablen Eigenschaften und eine zweite Folie (26) mit elektrisch gut leitfähigen, dia- oder paramagnetischen Eigenschaften trägt.

12. Vorrichtung nach Anspruch 11, dadurch gekennzeichnet, daß die Folien übereinanderliegend angeordnet sind.

13. Vorrichtung nach Anspruch 11 oder 12, dadurch gekennzeichnet, daß unter radialer Abstandsbildung zwischen den Folien (27, 28) eine Kunststoffzwischenschicht angeordnet ist.

14. Vorrichtung nach einem oder mehreren der Ansprüche 1 bis 13, dadurch gekennzeichnet, daß die mindestens eine Meßspule in zwei oder vier, jeweils nach Art einer Wheatstone'schen Halbbrücke oder Vollbrücke verschalteten Teilmeßspulen (20a, 20b) besteht und daß der Sensorkern (21") mindestens in seiner Oberfläche aus mindestens drei verschiedenen, sich abwechselnden Schichten der erwähnten unterschiedlichen Materialien besteht.

15. Vorrichtung nach Anspruch 14, dadurch gekennzeichnet, daß die Anzahl der Zonen auf dem Sensorkern (35) ein ungerades Vielfaches der Spulenbreite ist.

## Claims

1. Method of increasing the measurement sensitivity of position sensors operating in a noncontact fashion and comprising at least one measuring coil (20), the measuring coil or all measuring coils being traversed by an alternating current and being guided relative and adjacent to a shift element (21) (sensor core), and at least the surface of the latter being alternately subdivided at least once into a zone which corresponds in its action to a ferromagnetic, highly permeable material, and into a zone which corresponds in its action to an effectively conducting, diamagnetic or paramagnetic material or non-magnetizable material, so that a variable measurement voltage drops at the at least one measuring coil (20), which voltage enables the determination of the measurement displacement by means of the simultaneous application of the inductive and the eddy-current principle to the at least one measuring coil (20).

2. Method according to Claim 1, characterized in that during the shifting movement to be determined the at least one interface (22, 22a, 22b) between the zones passes through the sphere of action of the coil in such a way that a variable measurement voltage drops at the at least one measuring coil (20).

3. Method according to Claim 1 or 2, characterized in that in the course of the measurement process the at least one measuring coil is subjected over its electrically active width simultaneously to at least the surface effect both of an electrically effectively conducting but diamagnetic or paramagnetic material and of a ferromagnetic material.

4. Method according to one of Claims 1 or 2, characterized in that the alternating zones of different material characteristics are positioned closely on the sensor core, which executes a relative movement with respect to the at least one measuring coil, in such a way that the repeating maximum and minimum voltage values resulting during the shifting are detected as digital signals and further processed.

5. Device for increasing the sensitivity of position sensors operating in a non-contact fashion and comprising at least one measuring coil, which device is intended to execute the method according to one or more of Claims 1 to 4, characterized in that the surface of the sensor core (21, 21', 24, 30, 33, 35), which is opposite the coil and subjected to the action of its influence, and executes shifting movements relative to said coil, has at least two separate zones having, on the one hand, a highly permeable, ferromagnetic action and, on the other hand, an electrically effectively conducting but diamagnetic or paramagnetic action, there being a limit transition (22; 22a, 22b) between the two zones, which moves during the measurement process through the sphere of action of the coil.

6. Device according to Claim 5, characterized in that the sensor core (21) has the form of a rod and is surrounded by the measuring coil (20), which is constructed as a ring coil.

7. Device according to Claim 5, characterized in that the sensor core (33, 35, 39) comprises a face the surface of which, which is constructed in zones of different material action, is opposite a flat coil (32, 32').

8. Device according to one of Claims 5 to 7, characterized in that the sensor core (30) has a multiplicity of closely mutually adjacent zones of different material action, which during measurement alternately run past one coil (ring coil 31; flat coil 32), and in that the output signal of the coil is evaluated (digitally) in accordance with the maximum and minimum value.

9. Device according to one or more of Claims 5, 7, 8, characterized in that the sensor core is constructed in a circular shape with different rim zones for speed measurement, opposite which rim zones at least one flat coil (41) is arranged.

10. Device according to one or more of Claims 5 to 9, characterized in that the sensor core consists of a ferromagnetic, highly permeable material (Fe, Fe-Ni alloy, nickel iron), and is coated for the purpose of zone formation with a foil or layer of electrically effectively conducting but not ferromagnetic material (Al, Cu, alloys thereof).

11. Device according to one or more of Claims 5 to 9, characterized in that the sensor core (24) consists of an arbitrary material, possibly without electromagnetic characteristics, and carries a first foil (25) having ferromagnetic, highly permeable characteristics and a second foil (26) having electrically effectively conducting, diamagnetic or paramagnetic characteristics.

12. Device according to Claim 11, characterized in that the foils are arranged one above another.

13. Device according to Claim 11 or 12, characterized in that a plastic interlayer is arranged between the foils (27, 28) with the formation of radial spacing.

14. Device according to one or more of Claims 1 to 13, characterized in that the at least one measuring coil consists of two or four component measuring coils (20a, 20b) each connected in the manner of a half or full Wheatstone bridge, and in that the sensor core (21") consists, at least in its surface, of at least three different, mutually alternating layers of the above-mentioned different materials.

15. Device according to Claim 14, characterized in that the number of the zones on the sensor core (35) is an odd multiple of the coil width.


**Revendications**

1. Procédé pour augmenter la sensibilité de capteurs de déplacement sans contact, comportant au moins une bobine de mesure (20), procédé dans lequel la bobine de mesure ou la totalité des bobines de mesure est parcourue par un courant alternatif et est guidée relativement à un élément coulissant (21) (noyau du capteur) et à proximité de celui-ci, tandis qu'au moins la surface de cet élément est subdivisée au moins une fois en une zone se comportant comme une matière ferromagnétique à haute perméabilité et en une zone se comportant comme une matière bonne conductrice, dia- ou para- magnétique ou non magnétisable, de sorte que sur une bobine de mesure (20) ou les bobines de mesure, on a une tension variable de mesure qui permet de déterminer le déplacement par application simultanée, sur la bobine de mesure (20) ou les bobines de mesure, du principe de l'induction et du principe des courants de Foucault.

2. Procédé selon la revendication 1, caractérisé en ce que la couche limite ou les couches limites (22, 22a, 22b) entre les zones, parcoure ou parcourent, lors du déplacement à déterminer, la zone d'action de la bobine ou des bobines, de sorte que sur une bobine de mesure (20) ou les bobines de mesure on a une tension variable de mesure.

3. Procédé selon la revendication 1 ou la revendication 2, caractérisé en ce que la bobine de mesure ou les bobines de mesure, au cours du processus de mesure, est soumise, ou sont soumises, sur leur largeur d'interaction électrique, simultanément à au moins l'action superficielle aussi bien d'une matière électriquement bonne conductrice, mais toutefois dia-ou paramagnétique, qu'également à celle d'une matière ferromagnétique.

4. Procédé selon une des revendications 1 ou 2, caractérisé en ce que les zones dont les matériaux ont alternativement des propriétés différentes sur le noyau du capteur effectuant un déplacement relatif par rapport à la bobine ou aux bobines de mesure, sont resserrées d'une façon telle que les valeurs maximales et minimales de tension se répétant, fournies lors du déplacement, sont saisies sous la forme de signaux numériques et traitées ultérieurement.

5. Dispositif pour augmenter la sensibilité de capteurs de déplacement sans contact, comportant au moins une bobine de mesure, pour la mise en oeuvre du procédé selon une ou plusieurs des revendications 1 à 4, dispositif caractérisé en ce que la surface du noyau (21, 21', 24, 30, 33, 35) du capteur, placé en face de la bobine et soumis à l'influence de son action et effectuant relativement à cette bobine un mouvement de coulissement, comporte au moins deux zones distinctes dont l'une est ferromagnétique et hautement perméable, tandis que l'autre est électriquement bonne conductrice mais cependant dia-ou para- magnétique, avec un passage (22, 22a, 22b) entre les deux zones qui, pendant le processus de mesure, traverse la zone d'action de la bobine.

6. Dispositif selon la revendication 5, caractérisé en ce que le noyau (21) du capteur a la forme d'une tige et est entouré par la bobine de mesure (20) réalisée sous la forme d'une bobine annulaire.

7. Dispositif selon la revendication 5, caractérisé en ce que le noyau (33, 35, 39) du capteur comporte une surface dont la superficie comprenant des zones dont les matériaux ont une action différente, est placée en face d'une bobine plate (32, 32').

8. Dispositif selon une des revendications 5 à 7, caractérisé en ce que le noyau (30) du capteur comporte une pluralité de zones étroitement voisines dont les matériaux ont des actions différentes, et qui, au cours de la mesure, passent alternativement devant l'une des bobines (bobine annulaire 31, bobine plate 32) et en ce que le signal de sortie de la bobine est exploité (numériquement) en valeur maximale et en valeur minimale.

9. Dispositif selon une ou plusieurs des revendications 5, 7, 8, caractérisé en ce que le noyau du capteur est de forme circulaire avec des zones de bordure différentes pour détecter la vitesse de rotation, zones en face desquelles est disposée au moins une bobine plate (41).

10. Dispositif selon une ou plusieurs des revendications 5 à 9, caractérisé en ce que le noyau du capteur est constitué d'un matériau ferromagnétique, hautement perméable (Fe, alliage Fe-Ni, mumétal), et, pour permettre la formation de zones, est recouvert d'une feuille ou d'une couche en un matériau électriquement bon conducteur mais non ferromagnétique (Al, Cu, alliages de ces deux métaux).

11. Dispositif selon une ou plusieurs des revendications 5 à 9, caractérisé en ce que le noyau (24) du capteur est constitué d'un matériau quelconque, éventuellement sans propriétés électromagnétiques et porte une première feuille (25) avec des propriétés électromagnétiques de haute perméabilité, et une seconde feuille (26) électriquement bonne conductrice, avec des propriétés dia- ou para- magnétiques.

12. Dispositif selon la revendication 11, caractérisé en ce que les feuilles sont disposées l'une sur l'autre.

13. Dispositif selon la revendication 11 ou 12, caractérisé en ce qu'une couche intermédiaire en matière plastique, ménageant un intervalle radial, est disposée entre les feuilles (27, 28).

14. Dispositif selon une ou plusieurs des revendications 1 à 13, caractérisé en ce que la bobine de mesure ou les bobines de mesure est subdivisée ou sont subdivisées en deux ou quatre bobines de mesure partielles (20a, 20b) respectivement branchées à la façon d'un demi-pont ou d'un pont complet de Wheatstone, et en ce que le noyau (21") du capteur est constitué, au moins sur sa superficie, d'au moins trois couches différentes alternées des différents matériaux mentionnés.

15. Dispositif selon la revendication 14, caractérisé en ce que le nombre des zones sur le noyau (35) du capteur est un multiple impair de la largeur de la bobine.

# Fig.1

# Fig. 2

# Fig.3

# Fig.4

# Fig.4a

Pos.1 Pos.2 Pos.3

# Fig.4b

Fig.5

Fig.6a

Fig.6b

Fig.7

Fig.8

Fig.9

Fig.10

Fig.11

Fig.12

Fig.13

Fig.14